# EUROPEAN PATENT SPECIFICATION

(11) **EP 0 951 459 B1**
(45) Date of publication and mention of the grant of the patent: **16.08.2006**
(21) Application number: 97901371.1
(22) Date of filing: 08.01.1997
(51) Int. Cl.: C04B 28/34

(54) **BONDED AGGREGATE COMPOSITION AND BINDERS FOR THE SAME**
ZUSAMMENSETZUNGEN MIT GEBUNDENEN AGGREGATEN UND DAFÜR GEBRAUCHTE BINDEMITTEL
COMPOSITIONS A BASE D'AGREGATS LIES ET LIANTS POUR CES AGREGATS

(43) Date of publication of application: 27.10.1999
(73) Proprietor: Stellar Materials, Inc., Delray, FL 33483 (US)
(72) Inventor: TREMBLAY, Jean, New Hudson, MI 48165 (US)
(74) Representative: Whitfield, Gillian Janette
(86) International application number: PCT/US1997/000199
(87) International publication number: WO 1998/030513

(56) References cited:
- GB-A- 1 437 808
- JP-A- 57 067 070
- US-A- 4 066 471
- US-A- 4 419 133
- US-A- 4 786 328
- US-A- 5 152 836
- US-A- 5 279 665
- US-A- 5 382 289

## Description

### Background of the Invention

### I. Field of Invention:

The present invention relates to bonded aggregate structures used primarily for high temperature applications. More particularly, the present invention relates to materials required to protect holding vessels containing both ferrous and non-ferrous metals, molten glass, and airborne high temperature environments such as boilers and furnaces of all kinds. The present invention further relates to the composition for forming such structures and binders for use in such compositions.

### II. Description of the Prior Art:

Bonded aggregate compositions are a class of known materials useful for many purposes. The class includes such products as heat resistant floor materials, high temperature refractory materials, high temperature insulation materials and fire resistant materials. Bonded aggregate compositions generally comprise a suitable aggregate (a filler which determines the structural characteristics of the compositions before and after heat up) bound by a binder such as a cement.

Conventional cements used for bonding aggregates include aluminous cements, hydraulic cements, and Portland cements. Hydraulic cements are mixtures of fine ground lime, alumina, and silica which set to a hard product upon admixture with water, the water combining chemically with the cement constituents to form a hydrate. Portland cements are particularly hydraulic cements composed of lime, alumina, silica, and iron oxide (as tetracalcium aluminoferrate), tricalcium aluminate, tricalcium silicate, and dicalcium silicate. Portland cements contain generally less than five percent alumina.

Aluminous cements, in contrast, are hydraulic cements which contain at least thirty to thirty-five percent alumina, which is usually applied by the inclusion of calcined bauxite.

The cement or binder is selected to match the particular use for which the bonded composition will be used and to match the particular aggregate employed, which is similarly chosen in view of the ultimate use of the bonded composition.

Binder systems based upon phosphates have been employed, but the use of such systems normally include phosphoric acid (or a salt thereof in the presence of water) in combination with an inorganic metal oxide such as magnesium oxide or alumina oxide. Two types of products can be formed from magnesium oxide or alumina oxide. Two types of products can be formed from such systems: some experiencing high temperatures during setting while ultimately achieving a high p.s.i. strength and achieving a quick set of the product at ambient temperature (9.4°C to 29.4°C), and others having a controlled set by application of significant heat (93.3°C to 260°C) to bring about a final set. The major drawbacks of these systems are the short working times available for the ambient set formulations, which are typically on the order of one minute. While it is preferred in working with bonded aggregates of any type that the composition set fairly rapidly, a working time of at least three minutes and preferably a range of seven to ten minutes is most desirable. With controlled set the user is extremely limited as to where the materials can be used. Both of these compositions are very sensitive to impurity when exposed to temperatures above 1371.1°C. This limits their use both from an economic as well as practical point of view.

### Summary of the Invention

According to a first aspect of the present invention there is provided a method of preparation of a refractory lining on a holding vessel wherein the refractory lining is non-wetting to molten metals, the method comprising the steps of:
(i) preparing a bondable aggregate composition, said bondable aggregate composition comprising:
   (a) an aggregate selected from the group consisting of sand, stone, Flint clay, pea gravel, silica aggregate, ash, pumice, volcanic glass beads, Mulcoa, Kyanite, Mullite, chromite, bauxite, aluminium oxide, silicon oxide, chrome oxide, magnesium oxide, iron oxide, perlite, expanded vermiculite, dolomitic lime, talc, lime, calcium magnesium carbonate, tabular alumina, magnesium silicate, zirconia, phosphate rock, and mixtures thereof; and
   (b) a binder comprising:
      - an acidic phosphate-providing component, said component being in a liquid phase at ambient temperature and pressure; and
      - a dry component comprising CaO, Al₂O₃, SiO₂, and Fe₂O₃; in proportions adequate to allow working upon mixing of the binder and the aggregate and adequate to yield a rigid structure upon setting of said mixed binder and aggregate; and
(ii) applying the bondable aggregate structure to the holding vessel to provide a non-wetting refractory lining for the holding vessel.

According to a second aspect of the present invention there is provided a method of repairing high-temperature aggregate structures comprising applying to an aggregate structure a bondable aggregate composition, said bondable aggregate composition comprising:
(i) an aggregate selected from the group consisting of sand, stone, Flint clay, pea gravel, silica aggregate, ash, pumice, volcanic glass beads, Mulcoa, Kyanite, Mullite, chromite, bauxite, aluminium oxide, silicon oxide, chrome oxide, magnesium oxide, iron oxide, perlite, expanded vermiculite, dolomitic lime, talc, lime, calcium magnesium carbonate, tabular alumina, magnesium silicate, zirconia, phosphate rock, and mixtures thereof; and
(ii) a binder comprising:
   - an acidic phosphate-providing component, said component being in a liquid phase at ambient temperature and pressure; and
   - a dry component comprising CaO, Al₂O₃, SiO₂, and Fe₂O₃;
   in proportions adequate to allow working upon mixing of the binder and the aggregate and adequate to yield a rigid structure upon setting of said mixed binder and aggregate

According to a third aspect of the present invention there is provided a holding vessel with a refractory lining which is non-wetting to molten metals, wherein the lining is composed of a bonded aggregate composition comprising:
(a) an aggregate selected from the group consisting of sand, stone, Flint clay, pea gravel, silica aggregate, ash, pumice, volcanic glass beads, Mulcoa, Kyanite, Mullite, chromite, bauxite, aluminium oxide, silicon oxide, chrome oxide, magnesium oxide, iron oxide, perlite, expanded vermiculite, dolomitic lime, talc, lime, calcium magnesium carbonate, tabular alumina, magnesium silicate, zirconia, phosphate rock, and mixtures thereof; and
(b) a binder comprising:
   - an acidic phosphate-providing component, said component being in a liquid phase at ambient temperature and pressure; and
      a. a dry component comprising CaO, Al₂O₃, SiO₂, and Fe₂O₃;
      in proportions adequate to allow working upon mixing of the binder and the aggregate and adequate to yield a rigid structure upon setting of said mixed binder and aggregate.

According to a fourth aspect of the present invention there is provided a refractory bondable lining aggregate composition which is non-wetting to molten metals, the composition comprising:
(i) an aggregate selected from the group consisting of sand, stone, Flint clay, pea gravel, silica aggregate, ash, pumice, volcanic glass beads, Mulcoa, Kyanite, Mullite, chromite, bauxite, aluminium oxide, silicon oxide, chrome oxide, magnesium oxide, iron oxide, perlite, expanded vermiculite, dolomitic lime, talc, lime, calcium magnesium carbonate, tabular alumina, magnesium silicate, zirconia, phosphate rock, and mixtures thereof; and
(ii) a binder comprising:
   - an acidic phosphate-providing component, said component being in a liquid phase at ambient temperature and pressure; and
   - a dry component comprising CaO, Al₂O₃, SiO₂, and Fe₂O₃; in proportions adequate to allow working upon mixing of the binder and the aggregate and adequate to yield a rigid structure upon setting of said mixed binder and aggregate.

Applicant has discovered that the problems of the control of the setting speed of the aggregate composition, the sensitivity of the composition to impurities and the additional costs associated with providing a variety of binders for different aggregates can all be overcome by the use of a binder system comprising at least one phosphate-providing component which is in a liquid phase at ambient temperature and pressure, and at least one dry component containing an element selected from the group consisting of Group IIA elements. In one embodiment, the dry component comprises a calcium-providing component, a magnesium-providing component, or mixtures thereof. The binder may, but does not have to contain, a dry phosphate-providing component. In one embodiment, a dry phosphate-providing component and a calcium-providing component are preferably contained in a single material such as hydrated monocalcium phosphate (Ca H₂PO₄ H₂O). However, although these two components are contained in a single material in this embodiment, an additional calcium-providing material (such as calcium aluminate cement, calcium oxide, or mixtures of them) is required.

Strength and dimensional characteristics can be controlled by selectively varying the concentration and ratio of the wet and dry components. By varying the ratio of wet to dry components, the invention permits the use of commercial or preferably agricultural grade materials having lower cost than the highly purified constituents presently required in other systems. This invention does not have as a requirement the use of technical grade components, in particular technical grade phosphoric acid, as is required in other systems.

The invention is also directed to an admixture of only the dry binder components, wherein the binder is mixed with the aggregate and the wet phosphate-providing component at a remote location or where the bound aggregate structure is to be formed.

A basis for bonding in one preferred system is believed to be the admixture of a calcium-providing component such as a calcium aluminate with a wet phosphate-providing constituent such as a dilute phosphoric acid. Applicant has found that the optional addition of a dry phosphate-providing component to the basic binder not only lengthens the setting time by a controllable amount, but by varying the percentage strengths of the aqueous phosphates to the percentage strengths of the dry phosphates, also alters the strengths and refractory characteristics of the aggregate structures after they are heated.

The binder of the present invention can typically be employed with a variety of aggregate structures, such as refractory structures, high temperature insulation structures, ambient temperature structures such as regular floor and road applications, fire resistant structures, as well as a repair material for these high- and ambient-temperature structures. One particularly useful ambient temperature application involves the use of this system for the overall containment and neutralization of harmful liquid wastes, such as radioactive wastes. For example, the binder of the present invention can be used in conjunction with a phosphate-containing aggregate to both neutralize the waste, as well as contain it, either by hardening the waste itself or "walling" it in. In this way, environmental seepage of the harmful waste is avoided.

The optional dry phosphate-providing component of the present invention preferably also contains a calcium-providing component in a single material such as monocalcium phosphate, while the wet phosphate-providing component is typically a phosphoric acid solution, preferably an agricultural grade solution. In one embodiment, an additional calcium-providing component is included in the binder, thus the additional calcium-providing component usually comprises either a calcium aluminate cement of calcium oxide or a mixture of these materials.

The dry aggregate composition in accordance with the present invention typically comprises between fifty and ninety-five percent by weight of the aggregate, one to twenty-five percent by weight of a dry component containing an element selected from the group consisting of Group IIA elements, and zero to fifty percent by weight of the dry phosphate-providing component. Such a dry aggregate composition can be admixed with about five to eighty-five percent by weight of a wet phosphate-providing component, such as a solution of commercially available phosphoric acid solution.

The present invention is thus not only directed to the bonded aggregate composition or structure, but is also directed to a dry binder comprising a mixture of the dry phosphate component, the wet phosphate component and the calcium component, and also to a dry aggregate composition useful for forming an aggregate structure upon the addition of a wet phosphate component. In this situation, the dry aggregate composition comprises an aggregate, an optional dry phosphate component and a dry calcium and/or magnesium component. The invention is also directed to a method of forming a bonded aggregate structure comprising the steps of mixing a wet phosphorous-providing component with the dry aggregate composition, forming the admixture into an appropriate shape, and allowing the admixture to set.

As noted, the specific proportions of components optimal for a particular purpose can readily be selected on a trial-and-error basis, but in any event are selected so as to be adequate to achieve a bonded aggregate composition of adequate strength and utility after admixture and working. It is believed, however, that the wet-to-dry ratios are governed by the structure requirements of the finished, cured aggregate structure. Generally a lower wet-to-dry ratio will be expected to result in a bonded aggregate structure of higher strengths and stability. Dilution of the aqueous phosphate while increasing the proportion of, for example, dry phosphate and calcium aluminate, is expected to yield materials having high strengths in a lower temperature range (648.9°C to 1204.4°C), but suffering structure failure above that range. Increasing the phosphate content in the aqueous component while simultaneously decreasing the proportions of, for example, dry phosphate and calcium aluminate, is expected to yield materials having high strengths in a higher temperature range (1204.4°C to 1704.4°C) and to simultaneously extend the limit of structure failure to a higher temperature.

### Detailed Description of the Preferred

### Embodiment of the Present Invention

A better understanding of the present invention will now be had upon reference to the following detailed examples within the scope of the appended claims. A bonded aggregate structure according to the present invention is generally formed by the admixture of a phosphate-providing component which is in a liquid phase at ambient temperature and pressure, with a previously constituted admixture of dry components including an aggregate, and a component containing an element selected from the group consisting of
Group IIA elements, preferably a calcium- or magnesium-providing component or a mixture thereof. In one embodiment, calcium aluminate cement is utilized. Finally, an optional dry phosphate providing component may be added to the dry components. The proportions of these components in various compositions are set forth in the following examples.

The wet phosphate-providing component is preferably a dilute solution of agricultural grade phosphoric acid, although commercial, industrial and technical grades can also be used. The wet phosphate-providing component is added in an amount adequate to render the admixture workable yet also adequate to provide a sufficient phosphate content to permit rapid setting, on the order of 8 to 30 minutes at 21.1°C. An aggregate can be readily formed from thirty-three kilogram batches of the aggregate and dry component mixture, mixed with an appropriate amount of phosphoric acid solution.

A wet phosphate-providing component especially useful for refractory or high temperature insulation aggregates is shown in the examples and was prepared as a 1:1 to 4:1 dilution (water:acid) of TG-434, an orthophosphoric acid of H₃PO₄ available from Texas Gulf Chemical Co, Raleigh, N.C. A typical composition for TG-434 is:

| | |
|---|---|
| H₃PO₄ | 77.73% |
| Solids | 0.1% |
| Iron as Fe₂O₃ | 1.3% |
| Aluminum as Al₂O₃ | 0.6% |

any composition which contains soluble phosphate which is capable of providing dimensional and structural stability to the bonded aggregate structure when exposed to elevated temperature up to 1871.1°C.

The optional dry phosphate-providing component can be any material containing a water soluble phosphate in a concentration adequate to react with the calcium- or magnesium-providing component to provide an adequate bond to the aggregate structure. The preferred dry phosphate-providing component is monocalcium phosphate or triple superphosphate of formula Ca(H₂PO₄)2 H₂O sold as C-38 from Texas Gulf Chemical Co, Raleigh, N.C. A typical composition for C-38 is:

| | |
|---|---|
| P₂O₅ | 67.1 % |
| Calcium, as CaO | 20.9% |
| Fluoride compounds as F | 1.7% |
| Al₂O₃ | 0.40% |
| SiO₂ | 1.7% |
| Fe₂O₃ | 1.8% |
| MgO | 2.0% |
| SO₄ | 3.0% |

The advantage in using a monocalcium phosphate is combining both a phosphate providing component and a calcium providing component in one material. C-38 is an odorless, gray, granular solid having a specific gravity between 1.1 and 1.2 and possessing a melting point of 110°C. A 1% suspension in water has a pH of between about 2.5 to 2.8.

The additional calcium- or magnesium-providing component can be any material capable of providing supplemental calcium or magnesium to react with the phosphate components in order to provide adequate bonding in the aggregate structure. Calcium aluminate cements such as Secar, Lumnite, Refcon CaO Al₂O₃, CaO Al₂O₃ Fe₂O₃, CaO Al₂O₃ SiO₂, or CaO Al₂O₃ SO₄ are preferred materials, as well as long-working calcium aluminate cements (to extend both the working time and the setting time) and magnesium oxides. A particularly preferred additional calcium-providing material is the calcium aluminate cement sold under the name Refcon (trademark) by the Lehigh Cement Company in Allentown, Pennsylvania. Refcon is formed by sintering a pelletized, solid mixture of bauxite and limestone. A typical composition comprises:

| | |
|---|---|
| Al₂O₃ & TiO₂ | 57.40% |
| Total Iron as Fe₂O₃ | 1.20% |
| CaO | 34.20% |
| SiO₂ | 5.70% |
| SO₃ | 0.36% |

Refcon typically has a bulk density of about 1500 kg/m3 and a specific gravity of 3.02. It possesses a blaine specific surface of 3300 cm2/g. It has a one day compressive strength of 44.82 megapascal when measured by A.S.T.M. C-109. A preferred magnesium-containing component is Mag-Chem 10-40, a compound containing primarily MgO.

It should be noted that when monocalcium phosphate is used as a single source for both the dry phosphate and dry calcium-providing component, it appears that it is necessary to include the additional calcium-providing material mentioned above to achieve adequate bonding to provide dimensional and structural stability to the bonded aggregate structure when exposed to elevated temperatures of up to 1871.1°C.

As can be seen from the compositions of these materials, the present invention is advantageous in that it permits satisfactorily bound aggregate structures to be formed quickly (8 to 30 minutes) with adequate working time (10 minutes or more at 21.1°C and be able to withstand temperatures up to 1871.1°C using commercial and agricultural grade materials, including particularly a phosphoric acid such as TG-434, preferably diluted.

The invention is also advantageous in that the binder incorporating the preferred materials described above can be used with a variety of aggregates for different structural purposes. The binder of the present invention can be employed with refractory aggregates, refractory patching aggregates, high temperature insulation aggregates, and ambient temperature aggregates used in ambient applications.

| | |
|---|---|
| SO₃ | 0.36% |

Refcon typically has a bulk density of about 1500 kg/m3 and a specific gravity of 3.02. It possesses a blaine specific surface of 3300 cm2/g. It has a one day compressive strength of 44.82 megapascal when measured by A.S.T.M. C-109. A preferred magnesium-containing component is Mag-Chem 10-40, a compound containing primarily MgO.

It should be noted that when monocalcium phosphate is used as a single source of both the dry phosphate and dry calcium-providing component, it appears that it is necessary to include the additional calcium-providing material mentioned above to achieve adequate bonding to provide dimensional and structural stability to the bonded aggregate structure when exposed to elevated temperatures of up to 1871.1°C.

As can be seen from the compositions of these materials, the present invention is advantageous in that it permits satisfactory bound aggregate structures to be formed quickly (8 to 30 minutes) with adequate working time (10 minutes or more at 21.1°C) and be able to withstand temperatures up to 1871.1°C using commercial and agricultural grade materials, including particularly a phosphoric acid such as TG-434, preferably diluted.

The invention is also advantageous in that the binder incorporating the preferred materials described above can be used with a variety of aggregates for different structural purposes. The binder of the present invention can be employed with refractory aggregates, refractory patching aggregates, high temperature insulation aggregates, and ambient temperature aggregates used in ambient applications.

For example, typical aggregates useful for forming a bonded aggregate structure in accordance with the present invention include at least one of the following: flint clay, mulcoa, kyanite, mullite, chromite, tabular alumina, silicon oxide, silica, calcined bauxite, chrome oxide, zirconia, phosphate rock, and mixtures thereof. It is believed that some appreciable amount of aluminum-containing material is necessary for any dense refractory aggregate structure in order to achieve adequate bonding and maintain dimensional and structural stability when exposed to elevated temperatures.

The preferred refractory aggregates include flint clay; Mulcoa 47, 50, 60, 70, and 90; kyanite; mullites; chrome ore; bauxite; tabular alumina; and mixtures thereof. As the intended temperature of use of the refractory increases, the aluminum content of the aggregate generally increases as well.

An aggregate useful in the present invention to be used as an expandable high temperature insulation may be selected from at least one of: silica sand #140, mullite #200, kyanite #325, tabular alumina #200, dolomitic lime, and talc. A preferred aggregate for expandable insulation comprises a mixture of silica sand #140, dolomitic lime, and talc. The talc controls the size of the bubbles of carbon dioxide released during expansion and therefore allows the pores in the expanded insulation to be uniform in size. A particularly useful aggregate for an ambient temperature application involving use of this system to contain/solidify/neutralize liquid waste material (i.e., radioactive waste material) is phosphate-containing aggregates, preferably phosphate rock (sold as C-31 Phos-Rock by Texas Gulf Chemical Co.).

The chemical composition of these aggregates is well known to those skilled in this art. Mulcoa, flint clays, and kyanites are comprised of, in major part, aluminum (III) oxide, silica dioxide (that is, silicon tetroxide). Chrome ore is comprised of, in major part, chromium (III) oxide, aluminum oxide, and magnesium oxide. Tabular alumina is comprised substantially of pure aluminum (III) oxide. White sand is comprised of, in major part, silicon dioxide. Lime consists in major part of calcium oxide. White dolomitic lime is a mixture of lime and dolomite (calcium magnesium bicarbonate). Talc is a natural foliated hydrous magnesium silicate.

This list of aggregates which can be bound by the binder of the present invention is not intended to be an exhaustive list of aggregates useful in the present invention, but represent testing and conclusions brought about by using them. Because of the versatility of the binder system, it is expected that many other aggregates may be bound by the binder system of the present invention and be used to form useful bound aggregate structures. Which aggregate to use will be chosen in accordance with the end use requirements of the bound structure and the purity of the product needed.

As shown in the following examples, a dry aggregate composition in accordance with the present invention can be formed from a mixture of about 50 - 95 percent by weight of a suitable aggregate, 1 - 20 percent by weight of a dry calcium- and/or magnesium-providing component, and 0 - 50 percent by weight of a dry phosphate-providing component; and in one embodiment, from a mixture including 1-30 percent by weight of a single material providing both of the phosphate- and calcium-providing components, as well as an additional calcium component.

Thereafter, depending upon the type of bound aggregate structure that is desired, from about 5 - 85 percent by weight of a wet phosphate-providing component is admixed with the dry aggregate composition. For a refractory structure, between 10 and 30 percent by weight of the wet component will typically be employed. However, if it is desired that the admixed materials be expandable or pumped into the location of use (for example, if they are used as an expandable insulation or a pumpable high temperature insulation) more of the wet component will be employed, for example, preferable between 30 and 60 percent by weight.

Table I recites Examples #1 through #15 which define refractory compositions falling within the scope of the present invention. Table II recites the chemical analyses of the various components. The compressive strength (psi) and linear re-heat change were measured in accordance with prevailing A.S.T.M. standards. (For example, A.S.T.M. C-133-84 - Cold Crushing Strength and Modulus of Rupture of Refractory Bricks and Shapes and A.S.T.M C-113-74 - Reheat Change of Refractory Brick.) Samples were prepared for such testing by pouring 2.5 kg increments of the blended aggregate and binder mixture into an appropriate volume of aqueous phosphate solution and hand-mixing with a two inch trowel until the mixture is completely wetted out (typically for approximately one minute) and then depositing the mixture into appropriately dimensioned molds.

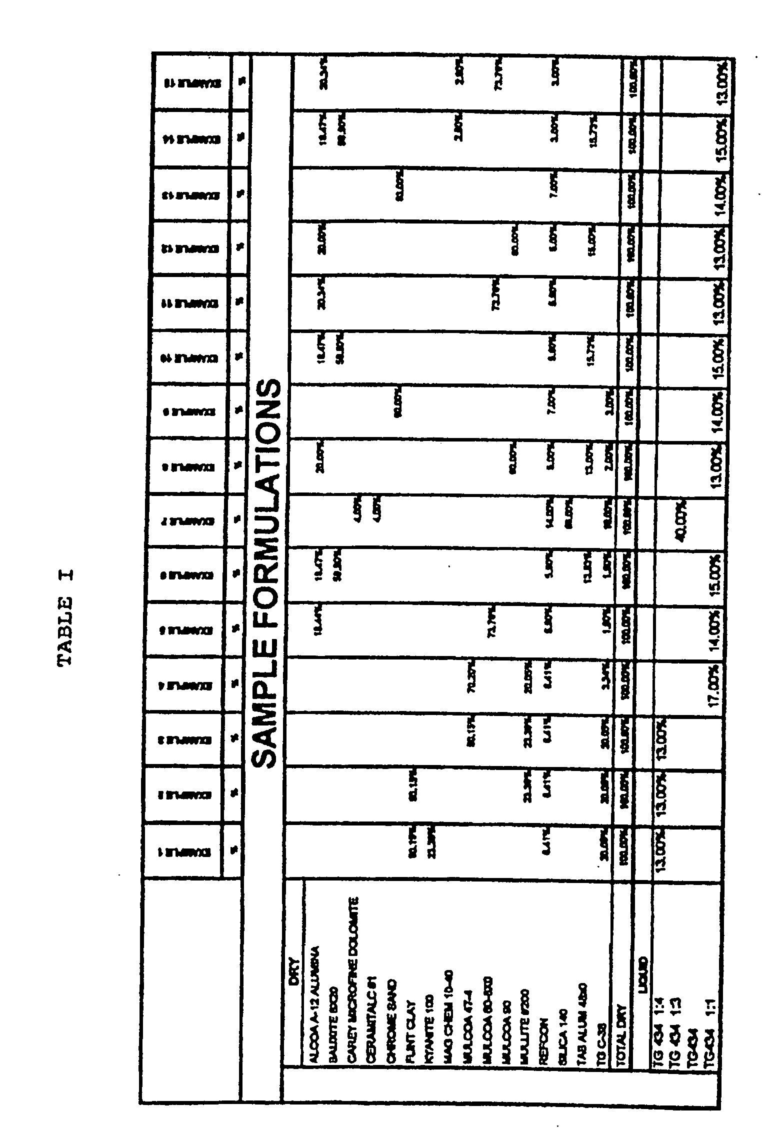

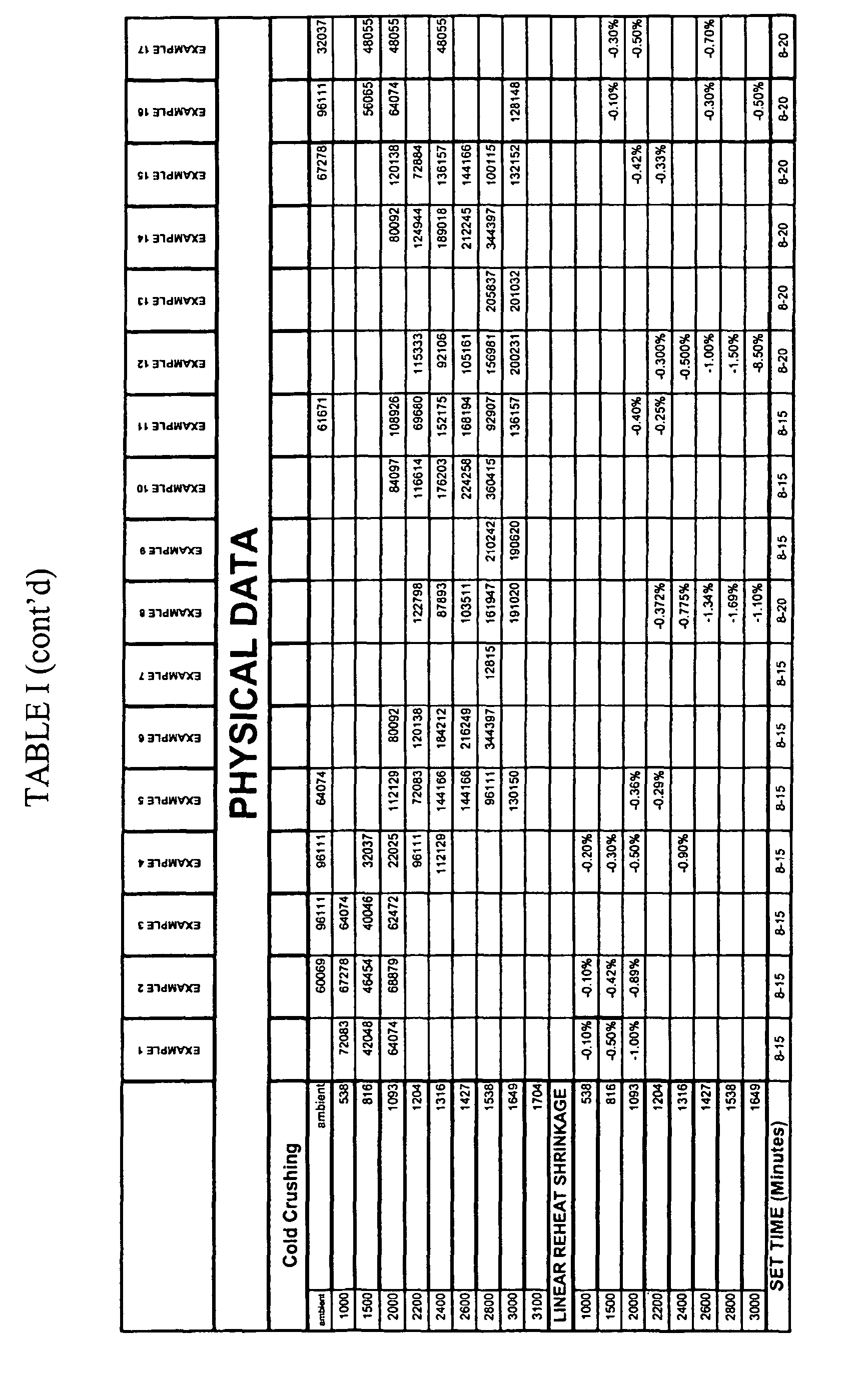

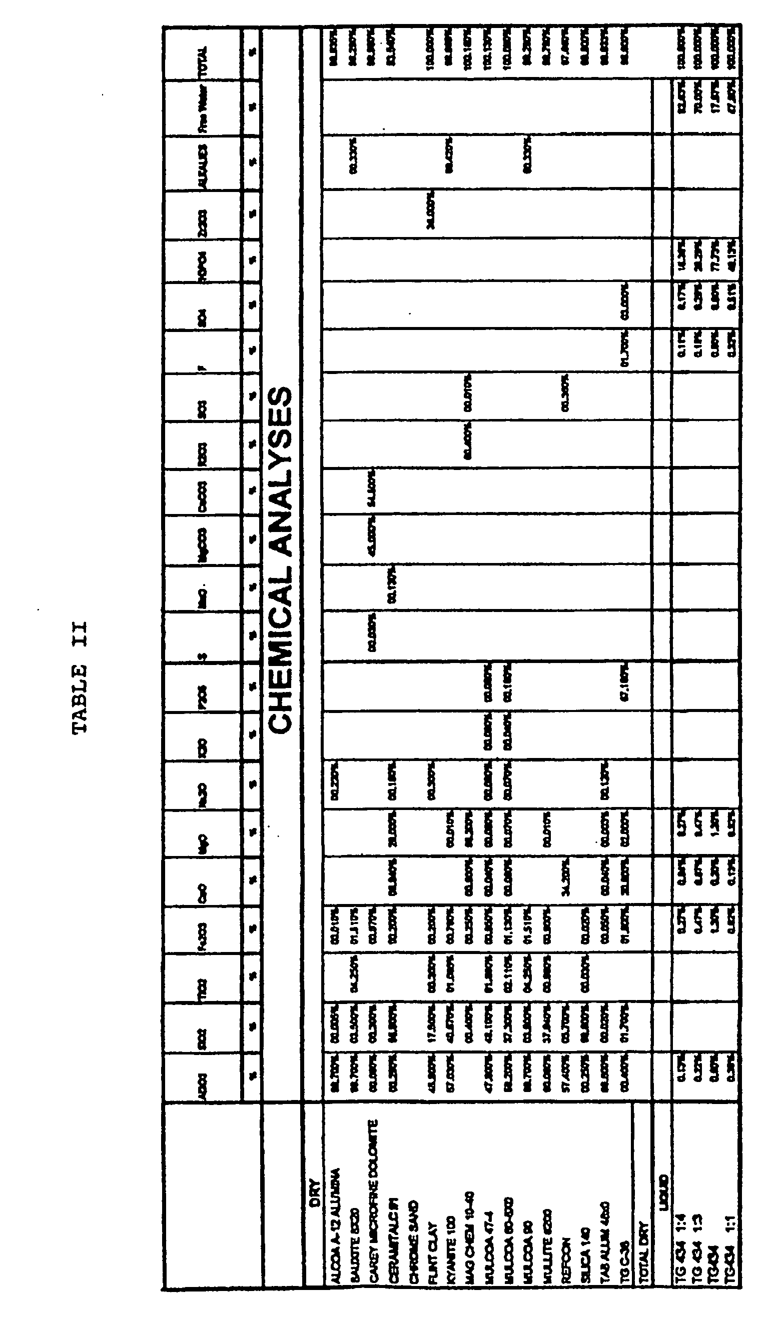

It can be seen from the examples in Table 1 that the binder system of the present invention is useful for forming a variety of different refractory materials of different utilities from a single binder system. The proportions in the table are adjustable to optimize the resulting aggregate structures, depending upon intended use.

The present invention thus provides a method for forming a bonded aggregate, as well as providing a binder system for such aggregate structures, a dry aggregate composition incorporating the dry constituents of the binder system, and a mixture of dry constituents needed in making the binder system. The present invention is advantageous over prior binder systems in that the constituents of the binder system can be commercial and agricultural grade materials, which have not been highly refined or purified. The dry binder components allow for the use of significantly less expensive aqueous phosphate solutions, and yet provide a bonded aggregate structure that is significantly better in refractory applications than is presently enjoyed by other known bonded aggregate structures for similar applications.

Moreover, the present invention advantageously reduces the expense of providing a variety of aggregate structures, because a single binder system can be employed to bind a wide variety of aggregates. The invention reduces the cost of supplying, manufacturing, or keeping in inventory different binder constituents.

With the refractory aggregate composition of the present invention using silica and other readily available refractory aggregates, the resulting aggregate structures possess significantly improved refractory characteristics over prior art structures in that the resulting structures are less susceptible to thermal shock, and in many cases the structures do not need to be pre-dried or pre-fired after their initial set before being used at high temperatures. In addition, in field testing, the resultant structures proved to be extremely non-wetting to a variety of molten metals (both ferrous and non-ferrous) thus providing the end user with a low-maintenance refractory lining throughout its useful life.

Furthermore, the use of calcium (either alone or in combination with magnesium) as the divalent binder permits the refractory characteristics to depend upon the proportion and concentration of the wet and dry phosphate-providing components, specifically a selection of the temperature range in which optional refractory characteristics are obtained. Such selectivity is absent in mono-aluminum phosphate and magnesium phosphate-based systems.

## Claims

1. A method of preparation of a refractory lining on a holding vessel wherein the refractory lining is non-wetting to molten metals, the method comprising the steps of:
(i) preparing a bondable aggregate composition, said bondable aggregate composition comprising:
(a) an aggregate selected from the group consisting of sand, stone, Flint clay, pea gravel, silica aggregate, ash, pumice, volcanic glass beads, Mulcoa, Kyanite, Mullite, chromite, bauxite, aluminium oxide, silicon oxide, chrome oxide, magnesium oxide, iron oxide, perlite, expanded vermiculite, dolomitic lime, talc, lime, calcium magnesium carbonate, tabular alumina, magnesium silicate, zirconia, phosphate rock, and mixtures thereof; and
(b) a binder comprising:
- an acidic phosphate-providing component, said component being in a liquid phase at ambient temperature and pressure; and
b. a dry component comprising CaO, Al₂O₃, SiO₂, and Fe₂O₃;
in proportions adequate to allow working upon mixing of the binder and the aggregate and adequate to yield a rigid structure upon setting of said mixed binder and aggregate; and
(ii) applying the bondable aggregate structure to the holding vessel to provide a non-wetting refractory lining for the holding vessel.

2. A method according to Claim 1, in which step (i)(b) further comprises the step of determining if an optional dry phosphate-providing component is required in order to lengthen the setting time by a controllable amount.

3. A method according to Claim 1 or Claim 2, in which step (i)(b) further comprises the step of varying the percentage strengths of the aqueous phosphate to the percentage strength of the dry phosphates in order to alter the strengths and refractory characteristics of the aggregate structure after heating.

4. A method according to any of Claims 1 to 3, in which step (i)(b) further comprises the step of selecting a required ratio of the wet component of the binder to the dry component in order to achieve structural requirements of the aggregate structure when cured.

5. A method according to Claim 1, wherein the refractory lining is non-wetting to both ferrous and non-ferrous metals.

6. A method according to Claim 1, wherein the holding vessel is a holding vessel for containing molten glass.

7. A method according to any preceding Claim, wherein the holding vessel is a boiler or a furnace.

8. A method of repairing high-temperature aggregate structures comprising applying to an aggregate structure a bondable aggregate composition, said bondable aggregate composition comprising:
(i) an aggregate selected from the group consisting of sand, stone, Flint clay, pea gravel, silica aggregate, ash, pumice, volcanic glass beads, Mulcoa, Kyanite, Mullite, chromite, bauxite, aluminium oxide, silicon oxide, chrome oxide, magnesium oxide, iron oxide, perlite, expanded vermiculite, dolomitic lime, talc, lime, calcium magnesium carbonate, tabular alumina, magnesium silicate, zirconia, phosphate rock, and mixtures thereof; and
(ii) a binder comprising:
- an acidic phosphate-providing component, said component being in a liquid phase at ambient temperature and pressure; and
- a dry component comprising CaO, Al₂O₃, SiO₂, and Fe₂O₃;
in proportions adequate to allow working upon mixing of the binder and the aggregate and adequate to yield a rigid structure upon setting of said mixed binder and aggregate.

9. A method according to any preceding Claim, wherein the binder of the composition further comprises a dry phosphate-providing component.

10. A method according to Claim 9, wherein the dry phosphate-providing component is present in the binder in an amount of from 0 to 50 percent by weight.

11. A method according to any preceding Claim, wherein the acidic phosphate-providing component comprises a phosphoric acid.

12. A method according to Claim 11, wherein the phosphoric acid is present in an amount of from 5 to 85 percent by weight.

13. A method according to any preceding Claim, **characterised in that** said liquid phase comprising said phosphoric acid also comprises SO₄.

14. A method according to any preceding Claim, wherein the aggregate is present in an amount of from 50 to 95 percent by weight.

15. A method according to any preceding Claim, wherein the aggregate structure is selected from the group consisting of refractory linings, high temperature insulation structures, and fire resistant structures.

16. A holding vessel with a refractory lining which is non-wetting to molten metals, wherein the lining is composed of a bonded aggregate composition comprising:
(a) an aggregate selected from the group consisting of sand, stone, Flint clay, pea gravel, silica aggregate, ash, pumice, volcanic glass beads, Mulcoa, Kyanite, Mullite, chromite, bauxite, aluminium oxide, silicon oxide, chrome oxide, magnesium oxide, iron oxide, perlite, expanded vermiculite, dolomitic lime, talc, lime, calcium magnesium carbonate, tabular alumina, magnesium silicate, zirconia, phosphate rock, and mixtures thereof; and
(b) a binder comprising:
- an acidic phosphate-providing component, said component being in a liquid phase at ambient temperature and pressure; and
c. a dry component comprising CaO, Al₂O₃, SiO₂, and Fe₂O₃;
in proportions adequate to allow working upon mixing of the binder and the aggregate and adequate to yield a rigid structure upon setting of said mixed binder and aggregate.

17. A holding vessel according to Claim 16, wherein the binder of the composition further comprises a dry phosphate-providing component.

18. A holding vessel according to Claim 17, wherein the dry phosphate-providing component is present in an amount from 0 to 50 percent by weight.

19. A refractory bondable lining aggregate composition which is non-wetting to molten metals, the composition comprising:
(i) an aggregate selected from the group consisting of sand, stone, Flint clay, pea gravel, silica aggregate, ash, pumice, volcanic glass beads, Mulcoa, Kyanite, Mullite, chromite, bauxite, aluminium oxide, silicon oxide, chrome oxide, magnesium oxide, iron oxide, perlite, expanded vermiculite, dolomitic lime, talc, lime, calcium magnesium carbonate, tabular alumina, magnesium silicate, zirconia, phosphate rock, and mixtures thereof; and
(ii) a binder comprising:
- an acidic phosphate-providing component, said component being in a liquid phase at ambient temperature and pressure; and
- a dry component comprising CaO, Al₂O₃, SiO₂, and Fe₂O₃;
in proportions adequate to allow working upon mixing of the binder and the aggregate and adequate to yield a rigid structure upon setting of said mixed binder and aggregate.

## Patentansprüche

1. Verfahren zur Herstellung einer feuerfesten Auskleidung in einem Auffangkessel, wobei die feuerfeste Auskleidung nicht durch geschmolzene Metalle benetzbar ist, umfassend die Verfahrensstufen
(i) Herstellen einer schmelzenden Aggregatzusammensetzung, wobei die schmelzende Aggregatzusammensetzung
(a) ein Aggregat, ausgewählt aus der Gruppe bestehend aus Sand, Stein, Flintton, Erbsenkies, Siliziumoxidaggregat, Asche, Bimsstein, vulkanischen Glasskugeln, Mulcoa, Kyanit, Mullit, Chromit, Bauxit, Aluminiumoxid, Siliziumoxid, Chromoxid, Magnesiumoxid, Eisenoxid, Perlit, Blähvermiculit, Dolomit-Kalk, Talk, Kalk, Kalzium-Magnesiumcarbonat, Tafeltonerde, Magnesiumsilikat, Zirkonerde, Phosphaterz und Mischungen davon; und
(b) ein Bindemittel, umfassend
- eine saure Phosphat bereitstellende Komponente, wobei die Komponente bei Raumtemperatur und Umgebungsdruck in einer flüssigen Phase vorliegt; und
- eine Trockenkomponente, umfassend CaO, Al₂O₃, SiO₂ und Fe₂O₃;
in ausreichenden Mengen, die ein Verarbeiten nach dem Mischen des Bindemittels mit dem Aggregat erlaubt und die nach dem Abbinden der Mischung aus dem Bindemittel und dem Aggregat eine feste Struktur ergibt; und
(ii) Auftragen der schmelzenden Aggregatstruktur auf den Auffangkessel, um den Auffangkessel mit einer nicht-benetzbaren feuerfesten Auskleidung zu versehen.

2. Verfahren nach Anspruch 1, in dem die Stufe (i)(b) ferner die Stufe umfasst, in der bestimmt wird, ob eine optionale Phosphat bereitstellenden Trockenkomponente erforderlich ist, um durch eine steuerbare Menge die Abbindezeit zu verlängern.

3. Verfahren nach Anspruch 1 oder 2, in dem die Stufe (i)(b) ferner die Stufe umfasst, in der der relative Säuregehalt des wässrigen Phosphats zu dem relativen Säuregehalt des trockenen Phosphats variiert wird, um die Festigkeiten und feuerbeständigen Eigenschaften der Aggregatstruktur nach dem Erhitzen zu ändern.

4. Verfahren nach einem der Ansprüche 1 bis 3, in dem die Stufe (i)(b) ferner die Stufe umfasst, in der ein erforderliches Verhältnis der Nasskomponente des Bindemittels zu der Trockenkomponente gewählt wird, um strukturelle Erfordernisse der Aggregatstruktur beim Härten zu erreichen.

5. Verfahren nach Anspruch 1, in dem die feuerfeste Auskleidung weder durch Eisenmetalle noch durch Nichteisenmetalle benetzbar ist.

6. Verfahren nach Anspruch 1, in dem der Auffangkessel ein geschmolzenes Glas enthaltender Auffangkessel ist.

7. Verfahren nach einem der vorhergehenden Ansprüche, in dem der Auffangkessel ein Kessel oder ein Ofen ist.

8. Verfahren zum Reparieren von Hochtemperatur-Aggregatstrukturen, umfassend das Auftragen einer schmelzenden Aggregatzusammensetzung auf eine Aggregatstruktur, wobei die schmelzende Aggregatzusammensetzung
(i) ein Aggregat, ausgewählt aus der Gruppe bestehend aus Sand, Stein, Flintton, Erbsenkies, Siliziumoxidaggregat, Asche, Bimsstein, vulkanischen Glasskugeln, Mulcoa, Kyanit, Mullit, Chromit, Bauxit, Aluminiumoxid, Siliziumoxid, Chromoxid, Magnesiumoxid, Eisenoxid, Perlit, Blähvermiculit, Dolomit-Kalk, Talk, Kalk, Kalzium-Magnesiumcarbonat, Tafeltonerde, Magnesiumsilikat, Zirkonerde, Phosphaterz und Mischungen davon; und
(ii) ein Bindemittel, umfassend:
- eine saure Phosphat bereitstellende Komponente, wobei die Komponente bei Raumtemperatur und Umgebungsdruck in einer flüssigen Phase vorliegt; und
- eine Trockenkomponente, umfassend CaO, Al₂O₃, SiO₂ und Fe₂O₃;
in ausreichenden Mengen umfasst, die ein Verarbeiten nach dem Mischen des Bindemittels mit dem Aggregat erlaubt und die nach dem Abbinden der Mischung aus dem Bindemittel und dem Aggregat eine feste Struktur ergibt.

9. Verfahren nach einem der vorhergehenden Ansprüche, in dem das Bindemittel der Zusammensetzung ferner eine Phosphat bereitstellende Trockenkomponente umfasst.

10. Verfahren nach Anspruch 9, in dem die Phosphat bereitstellende Trockenkomponente in einer Menge von 0 bis 50 Gew.-% in dem Bindemittel vorliegt.

11. Verfahren nach einem der vorhergehenden Ansprüche, in dem die saure Phosphat bereitstellende Komponente eine Phosphorsäure umfasst.

12. Verfahren nach Anspruch 11, in dem die Phosphorsäure in einer Menge von 5 bis 85 Gew.-% vorliegt.

13. Verfahren nach einem der vorhergehenden Ansprüche,
**dadurch gekennzeichnet, dass**
die die Phosphorsäure umfassende flüssige Phase ebenso SO₄ umfasst.

14. Verfahren nach einem der vorhergehenden Ansprüche, in dem das Aggregat in einer Menge von 50 bis 95 Gew.-% vorliegt.

15. Verfahren nach einem der vorhergehenden Ansprüche, in dem die Aggregatstruktur aus der Gruppe bestehend aus feuerfesten Auskleidungen, Hochtemperaturisolationsstrukturen und schwerentflammbaren Strukturen ausgewählt ist.

16. Auffangkessel mit einer feuerfesten Auskleidung, welcher nicht durch geschmolzene Metalle benetzbar ist, bei dem die Auskleidung aus einer schmelzenden Aggregatzusammensetzung zusammengesetzt ist, umfassend
(a) ein Aggregat, ausgewählt aus der Gruppe bestehend aus Sand, Stein, Flintton, Erbsenkies, Siliziumoxidaggregat, Asche, Bimsstein, vulkanischen Glasskugeln, Mulcoa, Kyanit, Mullit, Chromit, Bauxit, Aluminiumoxid, Siliziumoxid, Chromoxid, Magnesiumoxid, Eisenoxid, Perlit, Blähvermiculit, Dolomit-Kalk, Talk, Kalk, Kalzium-Magnesiumcarbonat, Tafeltonerde, Magnesiumsilikat, Zirkonerde, Phosphaterz und Mischungen davon; und
(b) ein Bindemittel, umfassend:
- eine saure Phosphat bereitstellende Komponente, wobei die Komponente bei Raumtemperatur und Umgebungsdruck in einer flüssigen Phase vorliegt; und
(c) eine Trockenkomponente, umfassend CaO, Al₂O₃, SiO₂ und Fe₂O₃;
in ausreichenden Mengen umfasst, die ein Verarbeiten nach dem Mischen des Bindemittels mit dem Aggregat erlauben und die nach dem Abbinden der Mischung aus dem Bindemittel und dem Aggregat eine feste Struktur ergeben.

17. Auffangkessel nach Anspruch 16, in dem das Bindemittel der Zusammensetzung ferner eine Phosphat bereitstellende Trockenkomponente umfasst.

18. Auffangkessel nach Anspruch 17, in dem die Phosphat bereitstellende Trockenkomponente in einer Menge von 0 bis 50 Gew.-% vorliegt.

19. Feuerfeste schmelzende Auskleidungsaggregatzusammensetzung, die nicht durch geschmolzene Metalle benetzbar ist, umfasssend
(i) ein Aggregat, ausgewählt aus der Gruppe bestehend aus Sand, Stein, Flintton, Erbsenkies, Siliziumoxidaggregat, Asche, Bimsstein, vulkanischen Glasskugeln, Mulcoa, Kyanit, Mullit, Chromit, Bauxit, Aluminiumoxid, Siliziumoxid, Chromoxid, Magnesiumoxid, Eisenoxid, Perlit, Blähvermiculit, Dolomit-Kalk, Talk, Kalk, Kalzium-Magnesiumcarbonat, Tafeltonerde, Magnesiumsilikat, Zirkonerde, Phosphaterz und Mischungen davon; und
(ii) ein Bindemittel, umfassend:
- eine saure Phosphatfreisetzende Komponente, wobei die Komponente bei Umgebungstemperatur und -druck in flüssiger Form vorliegt; und
- eine Trockenkomponente, umfassend CaO, Al₂O₃, SiO₂ und Fe₂O₃;
in ausreichenden Mengen, die ein Verarbeiten nach dem Mischen des Bindemittels mit dem Aggregat erlauben und die nach dem Abbinden der Mischung aus dem Bindemittel und dem Aggregat eine feste Struktur ergeben.

## Revendications

1. Procédé de préparation d'un revêtement réfractaire sur un récipient de retenue dans lequel le revêtement réfractaire est non mouillable par les métaux fondus, le procédé comprenant les étapes consistant à :
(i) préparer une composition à base d'agrégats liables, ladite composition à base d'agrégats liables comprenant :
(a) un agrégat choisi dans le groupe constitué par le sable, la pierre, l'argile flint, le gravier pisiforme, un agrégat de silice, la cendre, la ponce, les billes d'obsidienne, Mulcoa, la kyanite, la mullite, la chromite, la bauxite, l'oxyde d'aluminium, l'oxyde de silicium, l'oxyde de chrome, l'oxyde de magnésium, l'oxyde de fer, la perlite, la vermiculite expansée, la chaux dolomitique, le talc, la chaux, la carbonate de calcium et de magnésium, l'alumine tabulaire, le silicate de magnésium, la zircone, la phosphorite, et des mélanges de ceux-ci ; et
(b) un liant comprenant :
- un composant acide fournissant du phosphate, ledit composant étant en phase liquide à température et pression ambiantes ; et
b. un composant sec comprenant du CaO, de l'Al₂O₃, du SiO₂, et du Fe₂O₃ ;
en des proportions adaptées pour permettre le travail lors du mélange du liant et de l'agrégat et adaptées pour donner une structure rigide après le durcissement dudit liant et dudit agrégat mélangés ; et
(ii) appliquer la structure d'agrégat liable à la cuve de retenue pour fournir un revêtement réfractaire non mouillable pour la cuve de retenue.

2. Procédé selon la revendication 1, dans lequel l'étape (i) (b) comprend en outre l'étape consistant à déterminer si un composant sec fournissant du phosphate facultatif est nécessaire pour allonger le temps de durcissement d'une quantité contrôlable.

3. Procédé selon la revendication 1 ou la revendication 2, dans lequel l'étape (i) (b) comprend en outre l'étape consistant à modifier les pourcentages de résistance du phosphate aqueux par rapport au pourcentage de résistance des phosphates secs de manière à modifier les résistances et les caractéristiques réfractaires de la structure d'agrégat après le chauffage.

4. Procédé selon l'une quelconque des revendications 1 à 3, dans lequel l'étape (i) (b) comprend en outre l'étape consistant à choisir un rapport requis du composant mouillé du liant sur le composant sec de manière à atteindre les exigences structurelles de la structure d'agrégat lorsqu'elle est durcie.

5. Procédé selon la revendication 1, dans lequel le revêtement réfractaire est non mouillable à la fois par les métaux ferreux et par les métaux non ferreux.

6. Procédé selon la revendication 1, dans lequel le récipient de retenue est un récipient de retenue destiné à contenir du verre fondu.

7. Procédé selon l'une quelconque des revendications précédentes, dans lequel le récipient de retenue est une chaudière ou un four.

8. Procédé de réparation de structures d'agrégats à haute température comprenant l'application à une structure d'agrégat d'une composition à base d'agrégats liables, ladite composition à base d'agrégats liables comprenant :
(i) un agrégat choisi dans le groupe constitué par le sable, la pierre, l'argile flint, le gravier pisiforme, un agrégat de silice, la cendre, la ponce, les billes d'obsidienne, Mulcoa, la kyanite, la mullite, la chromite, la bauxite, l'oxyde d'aluminium, l'oxyde de silicium, l'oxyde de chrome, l'oxyde de magnésium, l'oxyde de fer, la perlite, la vermiculite expansée, la chaux dolomitique, le talc, la chaux, la carbonate de calcium et de magnésium, l'alumine tabulaire, le silicate de magnésium, la zircone, la phosphorite, et des mélanges de ceux-ci ; et
(ii) un liant comprenant :
- un composant acide fournissant du phosphate, ledit composant étant en phase liquide à température et pression ambiantes ; et
- un composant sec comprenant du CaO, de l'Al₂O₃, du SiO₂, et du Fe₂O₃ ;
en des proportions adaptées pour permettre le travail lors du mélange du liant et de l'agrégat et adaptées pour donner une structure rigide après le durcissement dudit liant et dudit agrégat mélangés.

9. Procédé selon l'une quelconque des revendications précédentes, dans lequel le liant de la composition comprend en outre un composant sec fournissant du phosphate.

10. Procédé selon la revendication 9, dans lequel le composant sec fournissant du phosphate est présent dans le liant en une quantité de 0 à 50 % en poids.

11. Procédé selon l'une quelconque des revendications précédentes, dans lequel le composant acide fournissant du phosphate comprend un acide phosphorique.

12. Procédé selon la revendication 11, dans lequel l'acide phosphorique est présent en une quantité de 5 à 85 % en poids.

13. Procédé selon l'une quelconque des revendications précédentes, **caractérisé en ce que** ladite phase liquide comprenant ledit acide phosphorique comprend également du SO₄.

14. Procédé selon l'une quelconque des revendications précédentes, dans lequel l'agrégat est présent en une quantité de 50 à 95 % en poids.

15. Procédé selon l'une quelconque des revendications précédentes, dans lequel la structure d'agrégat est choisie dans le groupe constitué par les revêtements réfractaires, les structures d'isolation pour températures élevées, et les structures résistantes au feu.

16. Récipient de retenue avec un revêtement réfractaire qui est non mouillable par les métaux fondus, dans lequel le revêtement se compose d'une composition à base d'agrégats liés comprenant :
(a) un agrégat choisi dans le groupe constitué par le sable, la pierre, l'argile flint, le gravier pisiforme, un agrégat de silice, la cendre, la ponce, les billes d'obsidienne, Mulcoa, la kyanite, la mullite, la chromite, la bauxite, l'oxyde d'aluminium, l'oxyde de silicium, l'oxyde de chrome, l'oxyde de magnésium, l'oxyde de fer, la perlite, la vermiculite expansée, la chaux dolomitique, le talc, la chaux, la carbonate de calcium et de magnésium, l'alumine tabulaire, le silicate de magnésium, la zircone, la phosphorite, et des mélanges de ceux-ci ; et
(b) un liant comprenant :
- un composant acide fournissant du phosphate, ledit composant étant en phase liquide à température et pression ambiantes ; et
c. un composant sec comprenant du CaO, de l'Al₂O₃, du SiO₂, et du Fe₂O₃ ;
en des proportions adaptées pour permettre le travail lors du mélange du liant et de l'agrégat et adaptées pour donner une structure rigide après le durcissement dudit liant et dudit agrégat mélangés.

17. Récipient de retenue selon la revendication 16, dans lequel le liant de la composition comprend en outre un composant sec fournissant du phosphate.

18. Récipient de retenue selon la revendication 17, dans lequel le composant sec fournissant du phosphate est présent en une quantité de 0 à 50 % en poids.

19. Composition. à base d'agrégats liables de revêtement réfractaire qui est non mouillable par les métaux fondus, la composition comprenant :
(i) un agrégat choisi dans le groupe constitué par le sable, la pierre, l'argile flint, le gravier pisiforme, un agrégat de silice, la cendre, la ponce, les billes d'obsidienne, Mulcoa, la kyanite, la mullite, la chromite, la bauxite, l'oxyde d'aluminium, l'oxyde de silicium, l'oxyde de chrome, l'oxyde de magnésium, l'oxyde de fer, la perlite, la vermiculite expansée, la chaux dolomitique, le talc, la chaux, la carbonate de calcium et de magnésium, l'alumine tabulaire, le silicate de magnésium, la zircone, la phosphorite, et des mélanges de ceux-ci ; et
(ii) un liant comprenant :
- un composant acide fournissant du phosphate, ledit composant étant en phase liquide à température et pression ambiantes ; et
- un composant sec comprenant du CaO, de l'Al₂O₃, du SiO₂, et du Fe₂O₃ ;
en des proportions adaptées pour permettre le travail lors du mélange du liant et de l'agrégat et adaptées pour donner une structure rigide après le durcissement dudit liant et dudit agrégat mélangés.
